# EUROPEAN PATENT SPECIFICATION

(11) **EP 4 488 509 B1**
(45) Date of publication and mention of the grant of the patent: **25.03.2026**
(21) Application number: 22899811.8
(22) Date of filing: 19.05.2022
(51) Int. Cl.: F03D 13/10, F03D 13/20, E04H 12/34, E04G 21/14, E04H 12/02, E04H 12/10, E04H 12/12, B63B 35/00, B63B 17/00, E04H 12/08

(54) **NOVEL WIND POWER GENERATION TOWER CONSTRUCTION METHOD**
NEUARTIGES KONSTRUKTIONSVERFAHREN FÜR EINEN WINDENERGIEERZEUGUNGSTURM
NOUVEAU PROCÉDÉ DE CONSTRUCTION D'UNE TOUR D'ÉNERGIE

(30) Priority: 02.03.2022 CN 202210198823
(43) Date of publication of application: 08.01.2025
(73) Proprietor: Wuhan Fushuo New Energy Thchnology Co., Ltd., Wuhan, Hubei 430070 (CN)
(72) Inventor: OU, Tianyan, Wuhan, Hubei 430070 (CN); LI, Yuan, Wuhan, Hubei 430070 (CN); RUAN, Yeshuang, Wuhan, Hubei 430070 (CN)
(74) Representative: Patent 42
(86) International application number: PCT/CN2022/093733
(87) International publication number: WO 2023/097991

(56) References cited:
- CN-A- 102 213 033
- CN-U- 206 054 184
- CN-U- 208 778 145
- CN-U- 214 741 849
- CN-U- 214 741 849
- JP-A- 2007 071 097
- KR-A- 20160 016 390
- US-A1- 2011 314 767
- US-A1- 2020 347 634
- US-A1- 2020 347 634

## Description

### TECHNICAL FIELD

The present disclosure relates to the field of wind power generation facilities, in particular to a novel wind power generation tower construction method.

### BACKGROUND

With the continuous development of wind power industry technology, the power of the wind turbine is higher and higher, and the installation height of the wind turbine pylon is also higher and higher. As the height of the wind turbine pylon is increased, the difficulty and cost of manufacturing and installation are also increased geometrically, and available cranes are more difficult to find. Therefore, under the urgent need to increase the height of the pylon and reduce the cost, the current conventional tower tubes and hoisting methods cannot meet the needs of the industry any more.

US2011314767A1 discloses a partially self-erecting wind turbine tower and a method for carrying out the assembly thereof. A central telescoping pylon is provided. This is placed in an upright position, with its base on a temporary foundation. A plurality of legs is then attached to the telescoping pylon. The upper extreme of each of the plurality of legs is temporarily attached to the upper extreme of the telescoping pylon. With the pylon and legs thus secured, a nacelle is attached to the upper extreme of the telescoping pylon. A hub with attached blades is then affixed to the nacelle. The telescoping pylon is then forced upward through the collar to extend the height of the assembly.

### SUMMARY

The invention is set out in the appended set of claims.

An objective of the present disclosure is to provide a novel wind power generation tower construction method in response to the problems in the prior art To achieve the objective above, the present disclosure adopts the following technical scheme.

A wind power generation tower constructed according to the method according to the invention includes, a lower space-type pylon, an upper straight cylinder section and an upper wind turbine assembly arranged from bottom to top in sequence, a middle conversion section configured for connecting the lower space-type pylon, the upper straight cylinder section and a self-lifting device are arranged on a top of the lower space-type pylon, and a self-lifting channel capable for allowing the upper straight cylinder section to pass vertically is arranged in a middle of the middle conversion section and a middle of the lower space type tower frame.

Further, several middle conversion section inclined struts are further arranged at an upper part of the middle conversion section, and the several middle conversion section inclined struts are annularly arranged on a periphery of a bottom of the upper straight cylinder section and configured for connecting the upper straight cylinder section and the middle conversion section.

Further, the middle conversion section includes a middle platform and several middle platform connectors arranged on a periphery of the middle platform, where each middle platform connector includes a platform connecting cylinder connected with the middle platform, two support leg connectors connected with the lower space-type pylon are arranged at a lower part of each platform connecting cylinder, and an inclined strut connector connected with the middle conversion section inclined strut and a self-lifting device connector connected with the self-lifting device are arranged at an upper part of each platform connecting cylinder.

Further, the lower space-type pylon includes several tower support legs in an inverted herringbone shape, and each tower support leg in the inverted herringbone shape includes two pylon columns, where lower parts of the two pylon columns of each tower support leg in the inverted herringbone shape are intersected together, and are correspondingly connected with a pylon base; upper parts of the two pylon columns of each tower support leg in the inverted herringbone shape are separated from each other, and are respectively intersected together with an upper part of one pylon column in an adjacent tower support leg in the inverted herringbone shape, respectively; and the upper parts of the two pylon columns of each tower support leg in the inverted herringbone shape are further connected with one support leg connector in the adjacent middle platform connector, respectively.

Further, several straining beams A with increasing lengths are further arranged between the two pylon columns in each tower support leg in the inverted herringbone shape from bottom to top at intervals, and several straining beams B with decreasing lengths are further arranged between every two adjacent tower support legs in the inverted herringbone shape from bottom to top at intervals.

Further, the self-lifting device includes a self-lifting support and several self-lifting driving devices and several self-lifting hoisting devices arranged at an upper part of the self-lifting support, the self-lifting support is correspondingly connected with several self-lifting device installation parts arranged on the middle conversion section, and each self-lifting driving device is correspondingly connected with one self-lifting hoisting device and configured for driving the self-lifting hoisting device connected with the self-lifting driving device to lift upward and downward along the height direction of the self-lifting support.

Further, the self-lifting support includes several support upright posts and several support beams, the several support beams are correspondingly arranged at upper parts of the several support upright posts, each support beam is correspondingly fixedly connected with upper parts of every two adjacent support upright posts, and a lower part of each upright post is correspondingly connected with one self-lifting device installation part.

Further, two support inclined struts arranged crosswise are further arranged between every two adjacent support upright pots, an upper end of each support inclined strut is fixedly connected with an upper end of one upright post in the two adjacent support upright posts corresponding to the support inclined struts, and a lower end of each support inclined strut is fixedly connected with a lower end of an other upright pot in the two adjacent support upright pots corresponding to the support inclined struts.

Further, a support connecting beam is further arranged between every two adjacent support beams, one self-lifting driving device and one self-lifting hoisting device are correspondingly arranged at a lower part of each support connecting beam, and a spring limiter is arranged on an inner side of each support connecting beam.

The wind power generation tower construction method according to the present invention includes the following steps.

S1, setting the tower tube base on the ground, and pre-installing the upper straight cylinder section on the tower tube base.

S2,setting the corresponding number of pylon bases around the tower tube base set in step S1, and building the corresponding lower space-type pylons and the corresponding middle conversion section on the pylon bases and around the upper straight cylinder section pre-installed in step S1 from bottom to top in sequence.

S3, assembling the self-lifting device for lifting the upper straight cylinder section on the ground, hoisting the assembled self-lifting device to the top of the built middle conversion section in step S2, and fixing the self-lifting device with a top of the middle conversion section.

S4, assembling the upper wind turbine assembly on the ground, hoisting the assembled upper wind turbine assembly to a top of the pre-installed upper straight cylinder section in step S1, and fixing the upper wind turbine assembly with the top of the upper straight cylinder section.

S5, connecting the self-lifting device with the bottom of the upper straight cylinder section.

S6, starting the self-lifting device, enabling the self-lifting device to drive a whole of the upper straight cylinder section and the upper wind turbine assembly to lift upward to the top of the lower space-type pylon along the self-lifting channel arranged in the middle of the lower space-type pylon and the middle of the middle conversion section, and fixing the bottom of the upper straight cylinder section with the middle conversion section.

S7, dismantling the self-lifting device and the tower tube base, and hoisting the self-lifting device to the ground to complete the construction of the novel wind turbine power generation tower according to claim 1.

Compared with the prior art, the present disclosure has the following advantages. Firstly, hoisting installation of the wind power generation pylon and the wind turbine assembly at a super-height is omitted, and the hoisting installation difficulty and hoisting installation cost are reduced. Secondly, the self-lifting device is fixed on the pylon, so that the lifting device is simplified, and additional fixed parts of cables of the lifting device are saved.

### BRIEF DESCRIPTION OF THE DRAWINGS

FIG. 1 is a structural schematic diagram of a wind power generation tower constructed according to the method according to the invention.
FIG. 2 is an enlarged drawing at a position of A in FIG. 1.
FIG. 3 to FIG. 8 are construction step diagrams illustrating the method according to the present invention.
FIG. 9 is a top view of a wind power generation tower when rotating at 45° in an embodiment in FIG. 5.
FIG. 10 is a structural schematic diagram of a self-lifting device in an embodiment.
FIG. 11 is a local enlarged drawing of FIG. 6.
FIG. 12 is a local enlarged drawing of FIG. 7.
FIG. 13 is a schematic diagram of connection of an upper straight cylinder section of a wind power generation tower and a middle conversion section of a middle platform and middle conversion section inclined struts.

Reference signs in attached figures: 1, lower space-type pylon; 11, pylon column; 12, connecting beam A; 13, connecting beam B; 2, middle conversion section; 21, middle platform; 22, middle platform connector; 221, platform connecting cylinder; 222, support leg connector; 223, inclined strut connector; 224, self-lifting device installation part; 3, middle conversion section inclined strut; 4, upper straight cylinder section; 5, upper wind turbine assembly; 6, self-lifting device; 61, self-lifting support; 611, support upright post; 612, support beam; 613, support inclined strut; 614, support connecting beam; 62, self-lifting driving device; 63, self-lifting hoisting device; 64, spring limiter; 7, tower tube base; and 8, pylon base.

### DETAILED DESCRIPTION OF THE EMBODIMENTS

In order to easily understand the technical means, creative features, achievement purposes and efficacy of the present disclosure, the present disclosure is further described below in conjunction with attached figures and specific embodiments.

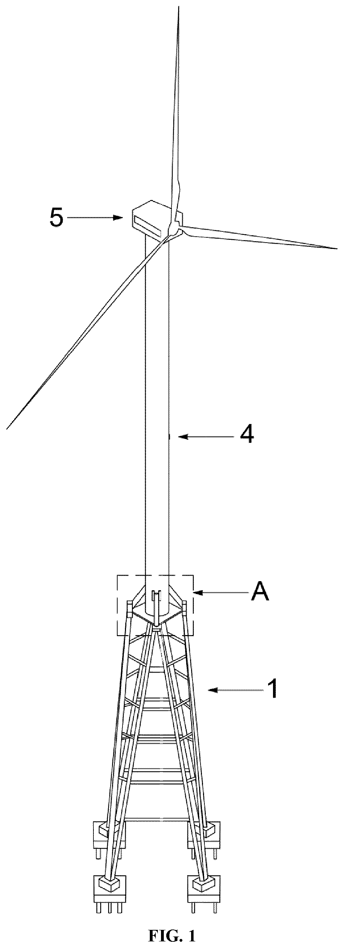

As shown in FIG. 1, FIG. 10 and FIG. 11, a wind power generation tower constructed according to the mehtod according to the present invention includes, a lower space-type pylon 1, an upper straight cylinder section 4 and an upper wind turbine assembly 5 arranged from bottom to top in sequence, where a middle conversion section 2 used for connecting the lower space-type pylon 1, the upper straight cylinder section 4 and a self-lifting device 6 are arranged on a top of the lower space-type pylon 1, and a self-lifting channel capable for allowing the upper straight cylinder section 4 to pass vertically is arranged in a middle of the middle conversion section 2 and a middle of the lower space type tower frame 1.

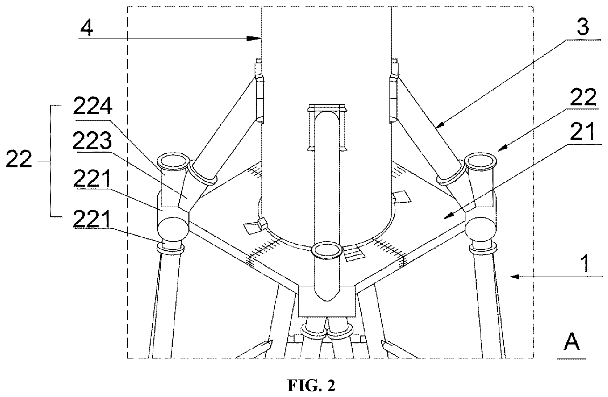

As a further improvement scheme of the present disclosure, as shown in FIG. 2, several middle conversion section inclined struts 3 are also arranged at an upper part of the middle conversion section 2, and the several middle conversion section inclined struts 3 are annularly arranged on a periphery of a bottom of the upper straight cylinder section 4 and fixedly connected with the upper straight cylinder section 4 and the middle conversion section 2 (for example, through bolts), respectively. An objective of setting these middle conversion section inclined struts 3 is to increase stability of connection between the upper straight cylinder section 4 and the lower space-type pylon 1 and prevent the upper straight cylinder section 4 and the lower space-type pylon 1 from overturning and collapsing.

Specifically, as an embodiment of the middle conversion section 2 in the wind power generation tower constructed according to the method according to the present invention as shown in FIG. 2, the middle conversion section 2 includes a middle platform 21 and several middle platform connectors 22 arranged on a periphery of the middle platform 21. More specifically, each middle platform connector 22 includes a platform connecting cylinder 221 connected with the middle platform 21, two support leg connectors 222 connected with the lower space-type pylon 1 are arranged at a lower part of each platform connecting cylinder 221, and an inclined strut connector 223 connected with the middle conversion section inclined strut 3 and a self-lifting device connector 224 connected with the self-lifting device 6 are arranged at an upper part of each platform connecting cylinder 221.

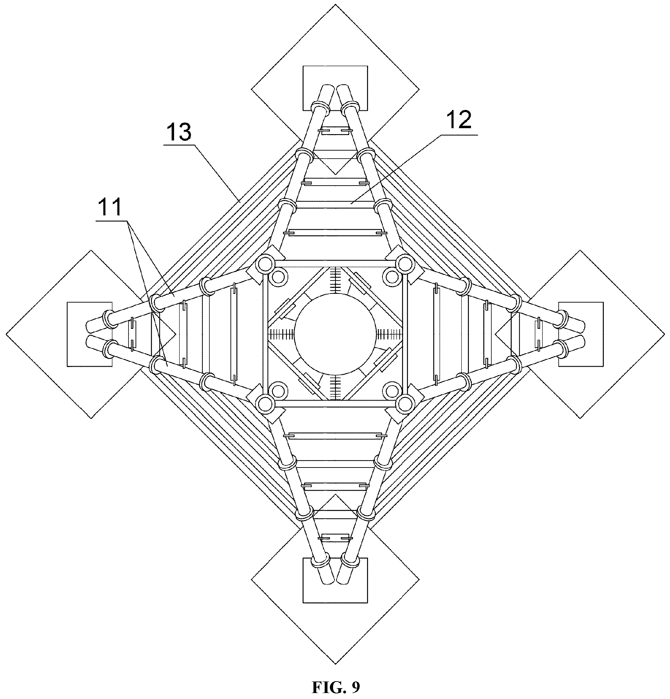

Specifically, as an embodiment of the lower space-type pylon 1 in the wind power generation tower constructed according to the method according to the present invention as shown in FIG. 1, the lower space-type pylon 1 includes several tower support legs in an inverted herringbone shape, and each tower support leg in the inverted herringbone shape includes two pylon columns 11. Lower parts of the two pylon columns 11 of each tower support leg in the inverted herringbone shape are intersected together, and are correspondingly fixedly connected with a pylon base 8. Upper parts of the two pylon columns 11 of each tower support leg in the inverted herringbone shape are separated from each other, and are respectively intersected together with an upper part of one pylon column 11 in an adjacent tower support leg in an inverted herringbone shape, respectively; and the upper parts of the two pylon columns 11 of each tower support leg in the inverted herringbone shape are also in bolted connection with one support leg connector 222 in the adjacent middle platform connector 22, respectively. More specifically, as shown in FIG. 9, several straining beams A 12 with increasing lengths are also arranged between the two pylon columns 11 in each tower support leg in the inverted herringbone shape from bottom to top at intervals, and several straining beams B 13 with decreasing lengths are also arranged between every two adjacent tower support legs in the inverted herringbone shape from bottom to top at intervals.

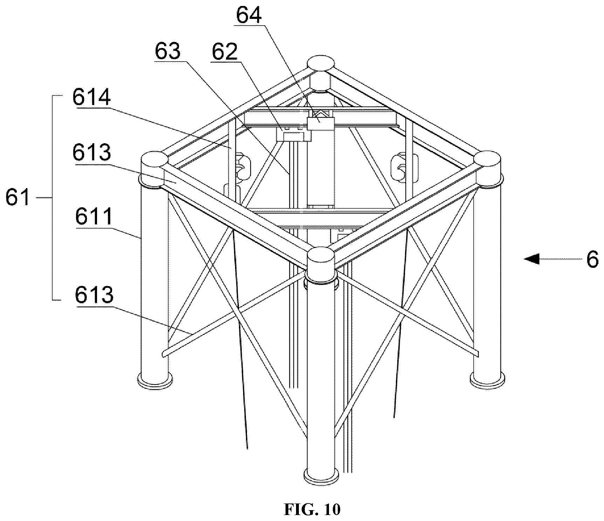

More specifically, as an embodiment of the self-lifting device 6 for lifting the upper straight cylinder section 4 and the upper wind turbine assembly 5 in the wind power generation tower constructed according to the method according to the invention as shown in FIG. 10, the self-lifting device 6 includes a self-lifting support 61 and several self-lifting driving devices 62 and several self-lifting hoisting devices 63 arranged at an upper part of the self-lifting support 61, wherein the self-lifting support 61 is correspondingly connected with several self-lifting device installation parts 224 arranged on the middle conversion section 2, and each self-lifting driving device 62 is correspondingly connected with one self-lifting hoisting device 63 and used for driving the self-lifting hoisting device 63 connected with the self-lifting driving device 62 to lift upward and downward along the height direction of the self-lifting support 61.

More specifically, in the embodiment of the self-lifting device, as shown in FIG. 10, the self-lifting support 61 includes several support upright posts 611 and several support beams 612, the several support beams 612 are correspondingly arranged at upper parts of the several support upright posts 611, each support beam 612 is correspondingly fixedly connected with upper parts of every two adjacent support upright posts 611, and a lower part of each support upright post 611 is correspondingly connected with one self-lifting device installation part 224.

More specifically, in the embodiment of the self-lifting device, as shown in FIG. 10, two support inclined struts 613arranged crosswise are also arranged between every two adjacent support upright pots 611, an upper end of each support inclined strut 613 is fixedly connected with an upper end of one upright post 611 in the two adjacent support upright posts 611 corresponding to the two support inclined struts 613, and a lower end of each support inclined strut 613 is fixedly connected with a lower end of an other upright pot 611 in the two adjacent support upright pots 611 corresponding to the two support inclined struts 613.

More specifically, in the embodiment of the self-lifting device, as shown in FIG. 10, one support connecting beam 614 is also arranged between every two adjacent support beams 612, and one self-lifting driving device 62 and one self-lifting hoisting device 63 are correspondingly arranged at a lower part of each support connecting beam 614. Where, the self-lifting driving device 61 is a winch preferably, and the self-lifting hoisting device 63 preferably includes a pulley block and a sling matched with the winch.

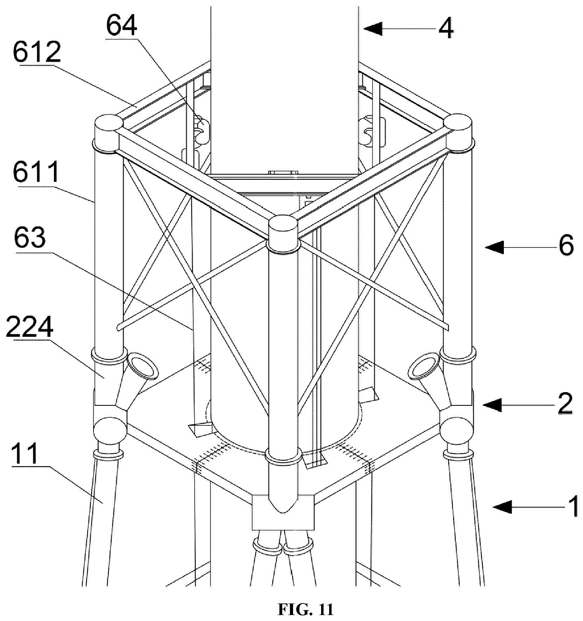

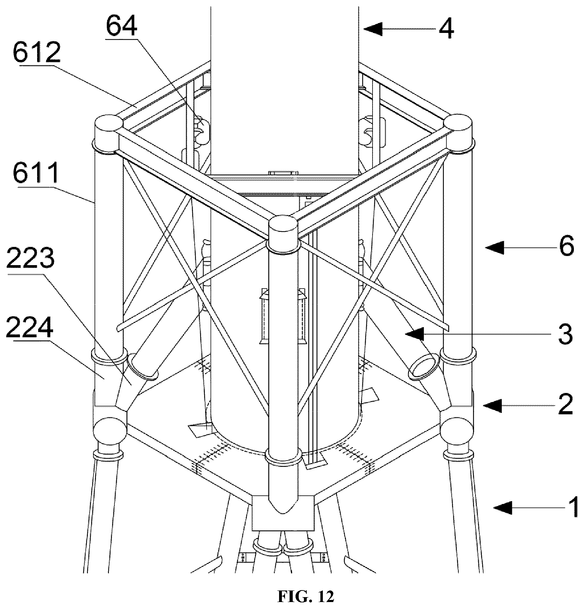

More specifically, in the embodiment of the self-lifting device, as shown in FIG. 10, a spring limiter 64 is arranged on an inner side of each support connecting beam 614. As shown in FIG. 11 and FIG. 12, the spring limiter 64 is used for supporting the to-be-installed upper straight cylinder section 4 of the wind power generation tower so as to prevent the upper straight cylinder section 4 from shaking forward, backward, left and right in self-lifting process to trigger collapse accidents.

A construction method according to the invention specifically referring to construction of the novel wind turbine power generation tower, includes the following specific construction steps.

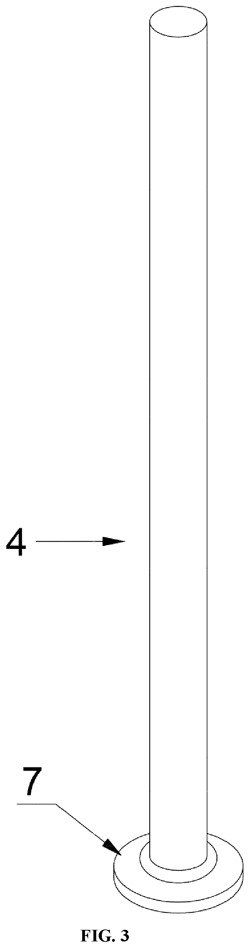

Step one, the tower tube base 7 is set on the ground, and the upper straight cylinder section 4 is pre installed on the tower tube base 7, as shown in FIG. 3. Specifically, in the step, the upper straight cylinder section 4 and the tower tube base 7 are fixed through bolts, and when the upper straight cylinder section 4 is lifted afterwards, the upper straight cylinder section 4 and the tower tube base 7 are detachable.

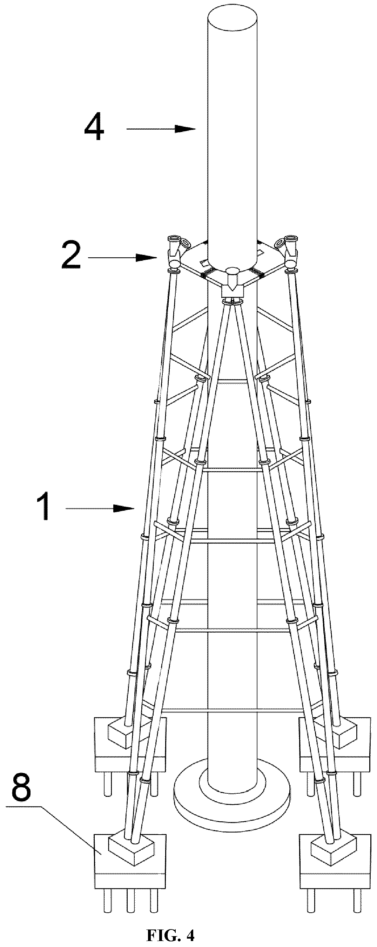

Step two, the corresponding number of pylon bases 8 are set around the set tower tube base 7, and the corresponding lower space-type pylon 1 and the corresponding middle conversion section 2 are built on the pylon base 8 and around the pre-installed upper straight cylinder section 4 from bottom to top in sequence, as shown in FIG. 4.

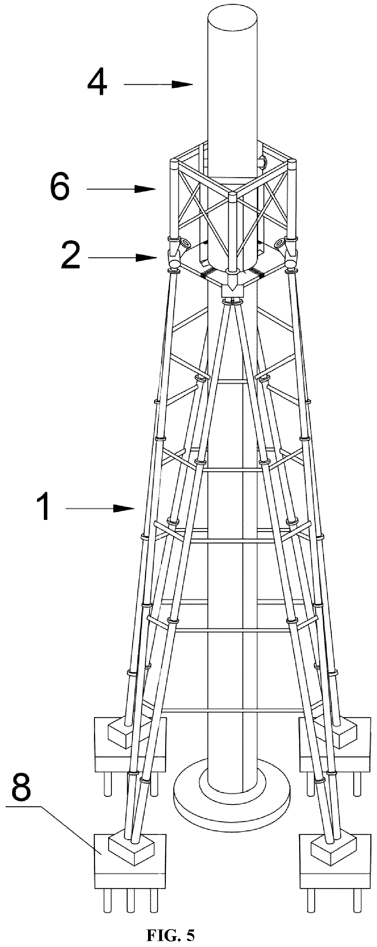

Step three, the self-lifting device 6 for lifting the upper straight cylinder section 4 is assembled on the ground, the assembled self-lifting device 6 is hoisted to a top of the built lower space-type pylon 1 and a top of the middle conversion section 2, and the self-lifting device 6 is fixed with the top of the middle conversion section 2, as shown in FIG. 5.

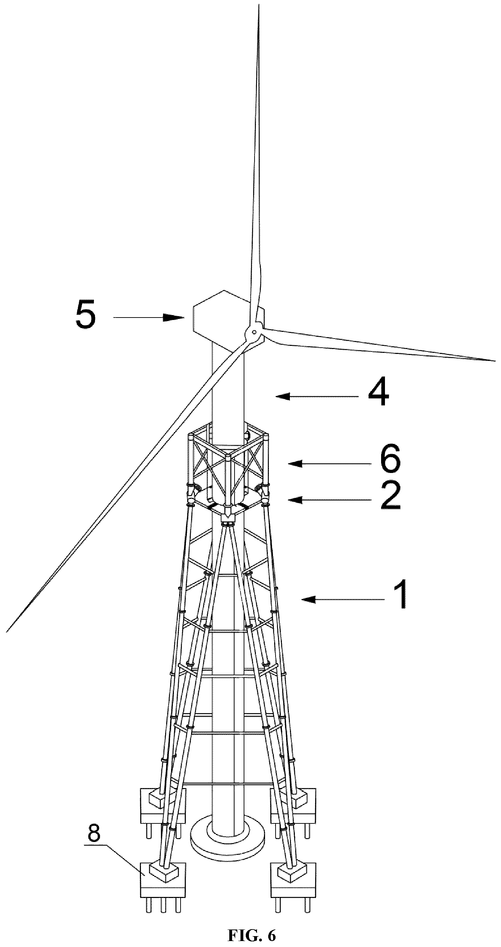

Step four, the upper wind turbine assembly 5 is assembled on the ground, the assembled upper wind turbine assembly 5 is hoisted to a top of the pre-installed upper straight cylinder section 4, and the upper wind turbine assembly 5 is fixed with the top of the upper straight cylinder section 4, as shown in FIG. 6.

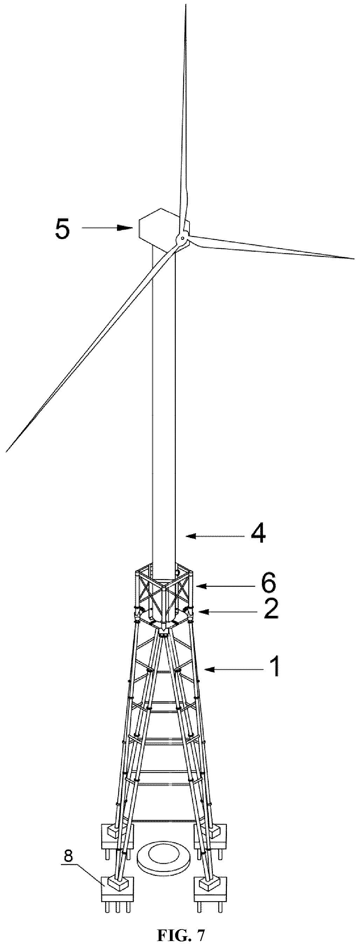

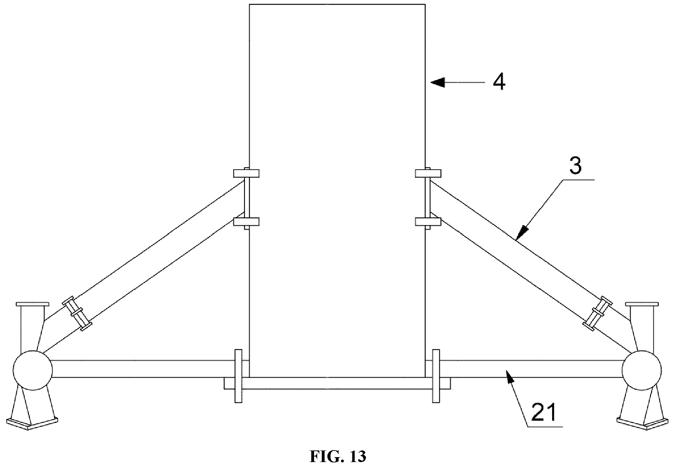

Step five, the self-lifting device 6 is connected with the bottom of the upper straight cylinder section 4, and the self-lifting device 6 is started to operate, a whole of the upper straight cylinder section 4 and the upper wind turbine assembly 5 is driven by the self-lifting device 6 lift upward to the top of the lower space-type pylon 1 along a self-lifting channel arranged in the middle of the lower space-type pylon 1 and the middle of the middle conversion section 2, then a lower part of the upper straight cylinder section 4isfixedly connected with the middle conversion section 2 through the middle conversion section inclined struts 3 (where, the middle conversion section inclined strut 3 and the upper straight cylinder section 4 as well as the middle conversion section inclined strut 3 and the middle conversion section 2 are connected through bolts), and then the bottom of the upper straight cylinder section 4 is fixed with the middle platform 21 of the middle conversion section 2 through bolts, as shown in FIG. 7 and FIG. 12. Where, when the upper straight cylinder section 4 is connected to the middle platform 21 of the middle conversion section 2, the bottom of the upper straight cylinder section 4 is located at a lower part of the middle platform 21, as shown in FIG. 13.

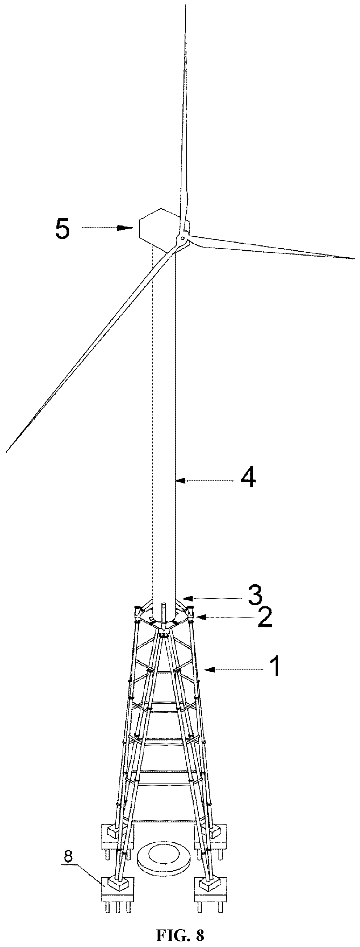

Step six, the self-lifting device 6 and the tower tube base 7. are dismantled, and the self-lifting device 6 is hoisted to the ground to complete the construction of the novel wind turbine power generation tower provided by the present disclosure, as shown in FIG. 8.

According to the wind turbine power generation tower constructed according to the method according to the invention, specifically, the corresponding self-lifting device installation parts 224 are arranged on the middle conversion section 2 of the existing wind power generation tower, so that the self-lifting device 6 is fixed on the pylon through the self-lifting device installation part 224, and then self-lifting operation of the upper straight cylinder section 4 and the upper wind turbine assembly 5 is realized by means of the self-lifting device 6.

The present disclosure has the advantages that the structure of the lifting device is greatly simplified, the additional fixed parts of cables of the lifting device are saved, and the installation difficulty and installation cost of the wind turbine pylon are greatly reduced.

Finally, the above are only the embodiments of the present disclosure and not intended to limit the patent scope of the present disclosure, while the patent protection is defined by the appended claim.

## Claims

1. A construction method of a novel wind turbine power generation tower, the construction method comprising the following steps:
S1, setting a tower tube base (7) on the ground, and pre-installing an upper straight cylinder section (4) on the tower tube base (7);
S2, setting a corresponding number of pylon bases (8) around the tower tube base (7) set in step S1, and building corresponding lower space-type pylons (1) and a corresponding middle conversion section (2) on the pylon bases (8) and around the upper straight cylinder section (4) pre-installed in step S1 from bottom to top in sequence;
S3, assembling a self-lifting device (6) for lifting the upper straight cylinder section (4) on the ground, hoisting the assembled self-lifting device (6) to a top of the built middle conversion section (2) in step S2, and fixing the self-lifting device (6) with the top of the middle conversion section (2);
S4, assembling an upper wind turbine assembly (5) on the ground, hoisting the assembled upper wind turbine assembly (5) to a top of the pre-installed upper straight cylinder section (4) in step S1, and fixing the upper wind turbine assembly (5) with the top of the upper straight cylinder section (4);
S5, connecting the self-lifting device (6) with a bottom of the upper straight cylinder section (4);
S6, starting the self-lifting device (6), enabling the self-lifting device (6) to drive a whole of the upper straight cylinder section (4) and the upper wind turbine assembly (5) to lift upward to a top of the lower space-type pylon (1) along a self-lifting channel arranged in a middle of the lower space-type pylon (1) and a middle of the middle conversion section (2), and fixing the bottom of the upper straight cylinder section (4) with the middle conversion section (2); and
S7, dismantling the self-lifting device (6) and the tower tube base (7), and hoisting the self-lifting device (6) to the ground to complete construction of the novel wind turbine power generation tower.

## Patentansprüche

1. Ein Bauverfahren für einen neuartigen Windkraftanlagenturm, wobei das Bauverfahren die folgenden Schritte umfasst:
S1, Aufstellen eines Turmrohrfundaments (7) am Boden und Vormontage eines oberen geraden Zylinderabschnitts (4) auf dem Turmrohrfundament (7);
S2, Aufstellen einer entsprechenden Anzahl von Pylonfundamenten (8) um das in Schritt S1 aufgestellte Turmrohrfundament (7) und Errichten entsprechender unterer Raumpylone (1) und eines entsprechenden mittleren Übergangssegments (2) auf den Pylonfundamenten (8) und um den in Schritt S1 vormontierten oberen geraden Zylinderabschnitt (4) von unten nach oben;
S3, Montage einer Selbsthebevorrichtung (6) zum Anheben des oberen geraden Zylinderabschnitts (4) am Boden, Anheben der montierten Selbsthebevorrichtung (6) auf die Oberseite des in Schritt S2 errichteten mittleren Übergangssegments (2) und Fixieren der Selbsthebevorrichtung (6) an der Oberseite des mittleren Übergangssegments (2);
S4, Montage der oberen Windturbinenbaugruppe (5) am Boden, Anheben der montierten oberen Windturbinenbaugruppe (5) auf die Oberseite des in Schritt S1 vorinstallierten oberen geraden Zylinderabschnitts (4) und Fixieren der oberen Windturbinenbaugruppe (5) an der Oberseite des oberen geraden Zylinderabschnitts (4);
S5, Verbinden der Selbsthebevorrichtung (6) mit der Unterseite des oberen geraden Zylinderabschnitts (4);
S6, Starten der Selbsthebevorrichtung (6), wodurch die Selbsthebevorrichtung (6) den gesamten oberen geraden Zylinderabschnitt (4) und die obere Windturbinenbaugruppe (5) entlang eines Selbsthebekanals, der in der Mitte der unteren Weltraumpylonen (1) und in der Mitte des mittleren Übergangssegments (2) angeordnet ist, auf die Oberseite der unteren Raumpylone (1) anhebt und die Unterseite des oberen geraden Zylinderabschnitts (4) am mittleren Übergangssegment (2) fixiert; und
S7, Demontage der Selbsthebevorrichtung (6) und des Turmrohrfundaments (7) sowie Anheben der Selbsthebevorrichtung (6) zum Boden, um die Errichtung des neuartigen Windkraftanlagenturms abzuschließen.

## Revendications

1. Procédé de construction d'une nouvelle tour de production d'énergie éolienne, ledit procédé de construction comprenant les étapes suivantes :
étape 1, installer une base de tube de tour (7) sur le sol, et pré-installer une section cylindrique droite supérieure (4) sur ladite base de tube de tour (7) ;
étape 2, installer un nombre correspondant de bases de pylône (8) autour de la base de tube de tour (7) installée à l'étape S1, et construire des pylônes inférieurs de type spatial correspondants (1) et une section de conversion intermédiaire correspondante (2) sur lesdites bases de pylône (8) et autour de la section cylindrique droite supérieure (4) pré-installée à l'étape S1, de bas en haut et en séquence ;
étape 3, assembler un dispositif auto-élévateur (6) destiné à lever la section cylindrique droite supérieure (4) sur le sol, hisser ledit dispositif auto-élévateur (6) assemblé au sommet de la section de conversion intermédiaire (2) construite à l'étape S2, et fixer ledit dispositif auto-élévateur (6) audit sommet de la section de conversion intermédiaire (2) ;
étape 4, assembler un ensemble éolien supérieur (5) sur le sol, hisser ledit ensemble éolien supérieur (5) assemblé au sommet de la section cylindrique droite supérieure (4) pré-installée à l'étape S1, et fixer ledit ensemble éolien supérieur (5) audit sommet de la section cylindrique droite supérieure (4)°;
étape 5, connecter ledit dispositif auto-élévateur (6) à une partie inférieure de ladite section cylindrique droite supérieure (4) ;
étape 6, démarrer ledit dispositif auto-élévateur (6), amener ledit dispositif auto-élévateur (6) à entraîner l'ensemble formé par la section cylindrique droite supérieure (4) et l'ensemble éolien supérieur (5) pour un levage ascendant vers un sommet du pylône inférieur de type spatial (1), le long d'un canal d'auto-élévation aménagé au centre dudit pylône inférieur de type spatial (1) et au centre de ladite section de conversion intermédiaire (2), et fixer ladite partie inférieure de la section cylindrique droite supérieure (4) à ladite section de conversion intermédiaire (2) ; et
étape 7, démonter ledit dispositif auto-élévateur (6) et ladite base de tube de tour (7), et hisser ledit dispositif auto-élévateur (6) au sol pour achever la construction de la nouvelle tour de production d'énergie éolienne.
